# EUROPÄISCHE PATENTSCHRIFT

(11) **EP 0 581 175 B1**
(45) Veröffentlichungstag und Bekanntmachung des Hinweises auf die Patenterteilung: **22.01.1997**
(21) Anmeldenummer: 93111636.2
(22) Anmeldetag: 21.07.1993
(51) Int. Cl.: C08G 59/04, C08L 63/00, C09D 17/00, C25D 13/06, C08G 59/14, C09D 5/44

(54) **Epoxidharze und ihre Verwendung für die Elektrotauchlackierung**
Epoxy resins and their use for electrodeposition
Résines époxydes et leur utilisation pour l'électrodéposition

(30) Priorität: 28.07.1992 DE 4224882
(43) Veröffentlichungstag der Anmeldung: 02.02.1994
(73) Patentinhaber: BASF Lacke + Farben AG, 48165 Münster-Hiltrup (DE)
(72) Erfinder: Huemke, Klaus, Dr., D-6701 Friedelsheim (DE); Sinn, Christian, Dr., D-2300 Kiel 1 (DE)
(74) Vertreter: Karau, Wolfgang, Dr.

(56) Entgegenhaltungen:
- EP-A- 0 165 558
- DE-A- 4 133 853
- FR-A- 1 369 436
- US-A- 3 793 278
- US-A- 4 035 275
- US-A- 4 698 141

## Beschreibung

Die vorliegende Erfindung betrifft neue Epoxidharze, die durch Umsetzung eines
A) mehrfunktionellen Epoxids, das pro Molekül durchschnittlich 1,5 bis 2,5 Epoxidgruppen trägt und dessen Epoxidäquivalentgewicht 100 bis 2 000 beträgt, mit - bezogen auf 1 mol Epoxidgruppen -
B) 0,1 bis 0,5 mol eines Alkylphenols, dessen Alkylgruppen 6 bis 20 Kohlenstoffatome tragen, und
C) 1 bis 100 mmol eines Polyoxyalkylendiols aus 1,2-Propylenoxid oder eines Copolymeren aus 1,2-Propylenoxid und anderen Alkylenoxiden mit einem mittleren Molekulargewicht (M_{w}) von 200 bis 5 000 und durchschnittlich 1 bis 4 an Methylgruppen gebundenen Sulfonsäuregruppen pro Molekül sowie
D) 0,2 bis 0,3 mol eines Diols, das
   d₁) ein phenolisches Diol und/oder
   d₂) ein Polyoxyalkylendiol mit einem mittleren Molekulargewicht (M_{w}) von 200 bis 5 000 ist,
mit der Maßgabe, daß das Umsetzungsprodukt ein Epoxidäquivalentgewicht von 1 000 bis 5 000 aufweist, erhältlich sind.

Ferner betrifft die Erfindung ein Verfahren zur Herstellung dieser Epoxidharze. Weiterhin sind Trägerharze für Pigmentpasten in der Elektrotauchlackierung, die durch Umsetzung mit einem Sulfid in Gegenwart einer Säure aus den Epoxidharzen hergestellt werden, sowie ein Verfahren zur Herstellung dieser Trägerharze Gegenstand der Erfindung. Außerdem betrifft die Erfindung Pigmentpasten, die die genannten Trägerharze enthalten, deren Verwendung in der Elektrotauchlackierung, ein Verfahren zur Elektrotauchlackierung unter Verwendung dieser Pigmentpasten sowie nach diesem Verfahren beschichtete Gegenstände.

In der Elektrotauchlackierung werden die auf einer Oberfläche abzuscheidenden Pigmente bekanntermaßen in einem Trägerharz angerieben oder gemahlen. Dieses Trägerharz wird dann mit weiteren Lack- und Bindemittelkomponenten sowie Vernetzern im Elektrotauchbad kathodisch abgeschieden und thermisch gehärtet.

In der EP-A 0 251 772 werden Trägerharze beschrieben, die aus einem Epoxidharz aufgebaut sind, das ternäre Sulfoniumgruppen und Alkylphenole enthält, wobei die Zahl der Kohlenstoffatome in den Alkylgruppen mindestens 4 beträgt. Aus diesen Harzen hergestellte Pigmentpasten führen nach kathodischer Abscheidung auf Metalloberflächen bei befriedigendem Korrosionsschutz zu gleichmäßigen Überzügen. Der Umgriff jedoch, d.h. die Abscheidung des Überzugs an Stellen des Metallkörpers, an denen das elektrische Feld aus räumlichen Gründen nur schwach ausgeprägt ist, läßt noch zu wünschen übrig.

Es bestand daher die Aufgabe, Trägerharze für Pigmentpasten in der Elektrotauchlackierung zur Verfügung zu stellen, die bei gutem Korrosionsschutz auch einen hohen Umgriff gewährleisten. Der gute Umgriff soll unabhängig davon erreicht werden, ob bleihaltige oder bleifreie Pigmentpasten verwendet werden.

Demgemäß wurden die eingangs definierten Epoxidharze gefunden.

Außerdem wurde ein Verfahren zu ihrer Herstellung, diese Epoxidharze enthaltende Trägerharze und ein Verfahren zur Herstellung der Trägerharze gefunden. Weiterhin wurden für die Elektrotauchlackierung geeignete Pigmentpasten, die diese Trägerharze enthalten, ein Verfahren zur Elektrotauchlackierung unter Verwendung dieser Pigmentpasten und nach diesem Verfahren beschichtete Gegenstände zur Verfügung gestellt.

Im folgenden werden die für die Anwendung der Epoxidharze in der Elektrotauchlackierung besonders vorteilhaften Ausführungsformen beschrieben.

### Komponente A

Komponente A umfaßt mehrwertige Epoxidverbindungen, die im Mittel 1,5 bis 2,5 Epoxidgruppen pro Molekül tragen und deren Epoxidäquivalentgewicht 100 bis 2 000 beträgt. Unter Epoxidäquivalentgewicht wird der Zahlenwert verstanden, der sich durch Division des Molekulargewichts durch die mittlere Anzahl von Epoxidgruppen im Molekül ergibt. Aus Gründen eines möglichst linearen Polymeraufbaus sind aber Verbindungen mit 2 Epoxidgruppen bevorzugt.

Es kommen bevorzugt Polyglycidylether in Betracht, die durch Reaktion von Polyphenolen mit Epihalohydrinen, vorzugsweise Epichlorhydrin, erhältlich sind. Als Polyphenole sind
4,4'-Dihydroxybenzophenon,
4,4-'Dihydroxyphenylsulfon,
1,1-Bis-(4-hydroxyphenyl)-ethan,
1,1-Bis-(4-hydroxyphenyl-)isobutan,
2,2-Bis-(4-hydroxy-3-tert.-butylphenyl)-propan,
1,5-Dihydroxynaphthalin und
bevorzugt 2,2-Bis-(4-hydroxyphenyl)-propan (Bisphenol A)

### zu nennen.

Neben Epoxidverbindungen aus Polyphenolen und Epihalogenhydrinen können auch Polyglycidylether mehrwertiger aliphatischer Alkohole eingesetzt werden. Hierbei handelt es sich vorzugsweise um Polymere von Ethylenoxid, Propylenoxid oder Tetrahydrofuran. Homopolymere können ebenso wie Copolymere als Alkoholkomponente dienen.

Es ist auch möglich, Mischungen verschiedener mehrfunktioneller Epoxide zu verwenden.

### Komponente B

Die mehrfunktionellen Epoxide werden mit Alkylphenolen umgesetzt. Die Zahl der Kohlenstoffatome der Alkylgruppen beträgt 6 bis 20. Monosubstituierte Alkylphenole werden bevorzugt, darunter besonders 4-Octylphenol, 4-Nonylphenol und 4-Dodecylphenol.

Bezogen auf 1 mol Epoxidgruppen werden 0,1 bis 0,5 mol Alkylphenol eingesetzt, vorzugsweise 0,2 bis 0,35 mol.

### Komponente C

Diese Diolkomponente dient zur Kettenverlängerung beim Harzaufbau. Es sind hier Polyoxyalkylendiole zu nennen, die aus 1,2-Propylenoxid oder aus 1,2-Propylenoxid und weiteren Alkylenoxiden wie Ethylenoxid und Tetrahydrofuran aufgebaut sind. Aus mehreren Komponenten statistisch aufgebaute Verbindungen sowie bevorzugt Blockpolymere kommen in Betracht.

Die Polyalkylendiole tragen Sulfonsäuregruppen, die durch Umsetzung der Polyoxyalkylendiole mit Chlorsulfonsäure in bekannter Weise an die Methylgruppen gebunden werden. Bei mittleren Molekulargewichten von 200 bis 5 000 beträgt die durchschnittliche Zahl der Sulfonsäuregruppen 1 bis 4 pro Molekül.

Besonders bevorzugt werden Blockpolymere aus Propylenoxid und 30 bis 50 Gew.-% Ethylenoxid, die zum Teil im Handel erhältlich sind.

Von Komponente C werden 1 bis 100 mmol pro mol Epoxidgruppen, vorzugsweise 5 bis 50 mmol, eingesetzt.

### Komponente D

Diese Komponente dient wie C zur Kettenverlängerung, wobei es sich um zwei Substanzklassen handelt:
d₁) Phenolische Diole
   Hier kommen die phenolischen Diole in Betracht, die bereits als Grundkomponenten für die mehrfunktionellen Epoxide (Komponente A) genannt wurden. Bevorzugt wird Bisphenol A.
d₂) Polyoxyalkylendiole
   Geeignete Verbindungen dieser Art sind insbesondere Homo- oder Copolymere von Ethylenoxid, Propylenoxid und Tetrahydrofuran mit einem mittleren Molekulargewicht (M_{w}) von 200 bis 5 000.

Die Komponente A kann schrittweise mit den Komponenten B, C und D umgesetzt werden. Von der Reaktionsführung her einfacher ist es aber, eine Mischung der Komponenten A bis D vorzulegen und die Reaktion durch Zugabe eines Katalysators zu starten.

Als Katalysatoren sind tertiäre Amine wie Triethylamin und Dimethylbenzylamin und weiterhin Phosphoniumsalze wie Ethyltriphenylphosphoniumbromid, zu nennen.

Die Reaktion kann im allgemeinen ohne Lösungsmittel ausgeführt werden. Zur Verringerung der Viskosität können inerte hochsiedende Lösungsmittel wie 2-Butoxyethanol, Diethylenglykol oder Dibutylglykol in Mengen von üblicherweise weniger als 10 Gew.-%, bezogen auf den Gesamtansatz, zugesetzt werden. Temperaturen von 50 bis 150°C haben sich als besonders geeignet erwiesen. Man erhitzt solange, bis das gewünschte Epoxidäquivalentgewicht erreicht ist. Dazu genügen in der Regel 1 bis 4 Stunden.

Die so erhaltenen erfindungsgemäßen Epoxidharze finden als thermisch härtbare Harze Verwendung. Für ihren Einsatz in der kathodischen Elektrotauchlackierung können sie durch Reaktion der verbliebenen Epoxidgruppen mit einem organischen Sulfid in Gegenwart einer Säure zu wasserlöslichen Harzen mit ternären Sulfoniumgruppen umgesetzt werden.

Als organische Sulfide kommen hierfür aliphatische und aromatische Verbindungen wie Diethylsulfid, Dipropylsulfid, Dibutylsulfid und Diphenylsulfid, gemischtaliphatische Sulfide wie Ethylphenylsulfid, cyclische aliphatische Sulfide wie Tetramethylensulfid und Pentamethylensulfid in Betracht. Weiterhin sind nicht interferierende Gruppen tragende Verbindungen wie Thiodiethanol, Thiodipropanol oder Thiodibutanol zu nennen. Bevorzugt werden Dibutylsulfid und Thiodiethanol.

Als Säuren können alle Verbindungen, die Sulfidgruppen ternärisieren, dienen. Mineralsäuren sind somit geeignet; bevorzugt werden aber organische Säuren, deren pKₐ-Wert unter 5 liegen sollte, darunter vor allem Milchsäure, Ameisensäure, Essigsäure und Propionsäure.

Sulfid und Säure können dem Epoxidharz gemeinsam oder nacheinander zugesetzt werden. Das Epoxidharz kann - wenn gewünscht - zuvor mit inerten hochsiedenden Lösungsmitteln verdünnt werden. Auch das Sulfid und die Säure können hierin vor der Zugabe gelöst werden. Im allgemeinen werden die Verbindungen bei 50 bis 100°C zum Epoxidharz gegeben. Es wird soviel Sulfid zugesetzt, daß das Umsetzungsprodukt 0,01 bis 0,25, vorzugsweise 0,15 bis 0,25 Milliäquivalente ternärer Sulfoniumgruppen pro Gramm Harz trägt.

Die so erhaltenen Trägerharze sind wasserverdünnbar.

Die Herstellung von Pigmentpasten aus den erfindungsgemäßen Trägerharzen erfolgt in an sich bekannter Weise. Das Trägerharz wird dazu in der Regel mit Wasser auf einen Feststoffgehalt von 30 bis 70 % verdünnt. Dann werden ein oder mehrere Pigmente zugesetzt, und diese Mischung wird z.B. in einer Kugelmühle auf die gewünschte Feinheit gemahlen.

Beispiele für solche Pigmente sind Titandioxid, Bleisilikat, Aluminiumsilikat, Dibutylzinnoxid, Ruß und Zinksilikat. Pigmente und Trägerharz werden vorzugsweise im Verhältnis von 1:1 bis 10:1 vermischt, vorzugsweise 1,5:1 bis 5:1. Die Pigmentpasten können noch weitere, in der Elektrotauchlackierung übliche Zusatzstoffe wie Füllstoffe, Dispergierhilfsmittel oder Lösungsmittel enthalten.

Die erfindungsgemäßen Pigmentpasten werden für ihre Anwendung in der Elektrotauchlackierung im allgemeinen mit an sich bekannten Bindemitteldispersionen und Vernetzerdispersionen kombiniert. Je nach Anwendung reichen die Gewichtsverhältnisse von Pigmentpaste zu der Mischung aus Bindemitteldispersion und Vernetzerdispersion von 0,1:1 bis 1:1.

Die Bindemittel basieren in der Regel auf Epoxidharzen aus mehrfunktionellen Epoxiden, z.B. Diglycidylethern von Polyphenolen, Polyolen sowie Polyaminen. Die Aminfunktionen können quaterniert werden, damit die Harze wasserlöslich werden.

Bei den an sich bekannten Vernetzern handelt es sich um Verbindungen, die aufgrund unterschiedlicher Reaktionen vernetzend wirken können. Folgende Verbindungsklassen kommen dafür bevorzugt in Betracht:
- Amidierungsvernetzer,
- Transaminierungsvernetzer,
- Transesterifizierungsvernetzer und
- mehrwertige verkappte Isocyanate.

- Amidierungsvernetzer sind solche organischen Verbindungen, die mit primären und/oder sekundären Aminogruppen des Epoxidharzes erst bei Einbrennbedingungen unter Amidbildung reagieren. Beispielsweise handelt es sich hierbei um Harze mit einem mittleren Molekulargewicht (M_{w}) von 200 bis 10 000, die mindestens zwei Carboalkoxymethylgruppen enthalten, wie sie in der DE-A 31 45 714 beschrieben werden.
- Transaminierungsvernetzer sind organische Verbindungen, die mit den primären und/oder sekundären Aminogruppen des Epoxidharzes bei Einbrennbedingungen unter Aminabspaltung so reagieren, daß über diese Gruppen Vernetzer und Epoxidharz verknüpft werden. Als Beispiele sind Mannich-Basen zu nennen, die aus Phenolen, Formaldehyd und sekundären Aminen aufgebaut werden. Besonders bevorzugt werden solche Verbindungen, die aus Polyalkylenoxid-diglycidylethern und aromatischen Dihydroxyverbindungen wie Bisphenol A aufgebaut sind und anschließend mit sekundären acyclischen oder cyclischen aliphatischen Aminen wie Dimethylamin, Diethylamin, Piperidin und mit Formaldehyd oder Formaldehyd liefernden Verbindungen umgesetzt werden.
- Transesterifizierungsvernetzer können mit Hydroxygruppen tragenden Epoxidharzen unter Umesterung reagieren. Beispiele sind Harze, die aus Acrylsäureestern aufgebaut sind, aber auch Harze mit Malonestergruppen, wie sie in der DE-A 37 35 601 beschrieben sind.
- Mehrwertige Isocyanate werden besonders bevorzugt, darunter z.B. Toluylendiisocyanat, 4,4'-Diphenylmethandiisocyanat, Isophorondiisocyanat oder trimerisiertes Hexamethylendiisocyanat. Diese Isocyanate werden vorzugsweise in verkappter Form eingesetzt. Übliche Verkappungsmittel sind Amine wie Dibutylamin, die zu Harnstoffverbindungen reagieren, Alkohole wie Methanol, Ethanol oder mehrwertige Alkohole wie Polyoxyalkylenglykole, welche Urethangruppen bilden, sowie Ketoxime wie Methylethylketoxim, die ebenfalls unter Addition an eine Isocyanatgruppe reagieren.

Die Bindemittel sind nach teilweiser oder vollständiger Neutralisation in Wasser dispergierbar. Zur Neutralisation geeignete Säuren sind bevorzugt Carbonsäuren wie Ameisensäure, Essigsäure, Propionsäure und Milchsäure, aber auch Mineralsäuren wie Phosphorsäure. Die Neutralisation des Bindemittels und des Vernetzers kann getrennt, bevorzugt aber gemeinsam nach vorheriger Vermischung erfolgen. Die so erhaltenen Dispersionen können mit Wasser, gegebenenfalls nach Entfernung organischer Lösungsmittel, auf einen gewünschten Feststoffgehalt verdünnt werden.

Bindemittel, Vernetzer und Pigmentpaste werden in ein Elektrotauchbad gegeben, der Feststoffgehalt wird durch Verdünnung mit Wasser eingestellt und die zu überziehenden Gegenstände werden in an sich bekannter Weise behandelt.

Die erfindungsgemäßen Pigmentpasten bewirken nach kathodischer Abscheidung einen guten Korrosionsschutz auf Metalloberflächen. Darüber hinaus wird ein guter Umgriff erzielt, und zwar sowohl mit bleihaltigen wie mit bleifreien Pigmentpasten.

### Beispiele

### 1.1 Allgemeine Vorschrift zur Herstellung erfindungsgemäßer Epoxidharze H

Die Komponenten A, B, C und D wurden in den in Tabelle 1 angegebenen Mengen bei 110°C mit dem Katalysator E versetzt. Nach 90 Minuten bei 130°C wurde das Epoxidäquivalentgewicht EEW gemessen. Mw steht in der Tabelle für das mittlere Molekulargewicht der Verbindungen.

**Tabelle 1**

| | | H 1 | H 2 | H 3 |
|---|---|---|---|---|
| A/1 | Bisphenol A - | 1128 g | 2369 g | 4061 g |
| | Diglycidylether EEW 188 | 3,0 mol | 6,3 mol | 10,8 mol |
| | | | | |
| A/2 | Diglydidylether | 138 g | - | - |
| | eines Polyethylenglykols, M_{w} 400 | 0,28 mol | | |
| | | | | |
| A/3 | Diglycidylether | - | 1115 g | - |
| | eines Polypropylenglykols, M_{w} 430 | | 1,17 mol | |
| | | | | |
| A/4 | Diglycidylether | - | - | 496 g |
| | eines Polytetrahydrofurans, M_{w} 400 | | | 0,56 mol |
| B/1 | Octylphenol | - | - | 330 g |
| | | | | 1,6 mol |
| | | | | |
| B/2 | Nonylphenol | 165 g | 660 g | - |
| | | 0,75 mol | 0,78 mol | - |
| | | | | |
| B/3 | Dodecylphenol | 197 g | 786 g | 393 g |
| | | 0,9 mol | 3,1 mol | 1,9 mol |
| C | Blockpolymer aus | 520 g | 156 g | 522 g |
| | 1,2-Propylenoxid und Ethylenoxid | 0,32 mol | 0,09 mol | 0,50 mol |
| | | | | |
| | Gew.-% Ethylenoxid | 41 % | 34 % | 35 % |
| | | | | |
| | Sulfonsäuregruppen pro Molekül | 1 | 2 | 1 |
| D | Bisphenol A | 380 g | 1140 g | 1140 g |
| | | 1,67 mol | 5,0 mol | 5,0 mol |
| E | Katalysator | 6,6 g Ethyltriphenylphosphoniumbromid | 6 g Dimethylbenzylamin | 7,1 g Triethylamin |
| EEW | | 1880 | 2200 | 1950 |

### 1.2 Herstellung erfindungsgemäßer Trägerharze TH

Die unter 1.1 beschriebenen Ansätze wurden nacheinander mit einem Lösungsmittel verdünnt und mit einem Sulfid sowie einer Säure bei 80°C umgesetzt. Die Einzelheiten sind Tabelle 2 zu entnehmen.

**Tabelle 2**

| | TH 1 | TH 2 | TH 3 |
|---|---|---|---|
| Epoxidharz | H 1 | H 2 | H 3 |
| | | | |
| Lösungsmittel | 2-Butoxyethanol | Diethylenglykol | Dibutylglykol |
| | 280 g | 912 g | 348 g |
| | | | |
| Sulfid | Thiodiethanol | Dibutylsulfid | Thiodiethanol |
| | 78 g | 223 g | 203 g |
| | 0,64 mol | 1,53 mol | 1,67 mol |
| | | | |
| Säure | Milchsäure | Milchsäure | Milchsäure |
| | 178 g | 275 g | 250 g |
| | 60 Gew.-% | 60 Gew.-% | 60 Gew.-% |
| Milliäquivalente an ternären Sulfoniumgruppen pro Gramm Harz | 0,24 | 0,17 | 0,24 |

### 1.3 Vergleichsträgerharz THV (nach EP-A 0 251 772, Beispiel 3, Seite 6)

661 g (3,51 mol) eines Polyglycidylethers von Bisphenol A (EEW 1020), 261 g (2,29 mol) Bisphenol A und 61,5 g (0,23 mol) Dodecylphenol wurden auf 107°C erhitzt, mit 0,98 g Ethyltriphenylphosphoniumiodid versetzt und eine Stunde bei 125°C gehalten (EEW 1020). Bei 75°C wurden 244 g (1,0 mol) Thiodiethanol, 134 g (1,0 mol) Dimethylpropionsäure und 30,6 g Wasser zugesetzt, und die Komponenten wurden bei dieser Temperatur gehalten, bis praktisch keine Säure mehr nachweisbar war. Das Harz enthielt 0,97 Milliäquivalente ternärer Sulfoniumgruppen pro Gramm Harz.

### 1.4 Herstellung erfindungsgemäßer Pigmentpasten P und Vergleichspasten PV

Die Pigmentpasten enthielten neben den in den Tabellen 3 angegebenen Bestandteilen jeweils 35 g Aluminiumsilikat, 11 g Dibutylzinnoxid und 3,5 g Perlruß.

**Tabelle 3a**

| | Erfindungsgemäß | | | Vergleich |
|---|---|---|---|---|
| [g] | P1 | P2 | P3 | PV1 |
| | TH1 | TH2 | TH3 | THV |
| Trägerharz | 73 | 77 | 70 | 98 |
| Titandioxid | 175 | 175 | 175 | 175 |
| Bleisilikat | 8 | 8 | 8 | 8 |
| Zinksilikat | - | - | - | - |
| Wasser | 195 | 190 | 198 | 169 |

**Tabelle 3b**

| | Erfindungsgemäß | | | Vergleich |
|---|---|---|---|---|
| [g] | P4 | P5 | P6 | PV2 |
| | TH1 | TH2 | TH3 | THV |
| Trägerharz | 73 | 77 | 70 | 98 |
| Titandioxid | 155 | 155 | 155 | 155 |
| Bleisilikat | - | - | - | - |
| Zinksilikat | 28 | 28 | 28 | 28 |
| Wasser | 195 | 190 | 198 | 169 |

Die angegebenen Mengen aller Komponenten wurden in einer Kugelmühle bis zu einer Kornfeinheit von ≤ 6 µm gemahlen.

Von den Vergleichsharzen sind größere Mengen als von den erfindungsgemäßen Harzen nötig, um die angegebenen Pigmentmengen in der jeweiligen Paste zu stabilisieren, d.h. ein Absetzen der Pigmente zu verhindern.

### 1.5 Herstellung eines Bindemittels (nach DE-A 35 42 168, Komponente A1, Seite 4 bis 5)

4,85 kg (5,0 mol) eines Diglycidylethers auf Basis von Bisphenol A und Epichlorhydrin (Epoxidäquivalentgewicht 485) wurden in 1,04 kg Toluol und 1,04 kg Isobutanol bei 65°C mit 300 g (4,0 mol) Methylethanolamin versetzt. Als ein Epoxidäquivalentgewicht von 1 070 erreicht war, setzte man 1 850 g einer Lösung eines Kondensationsprodukts sowie 128 g Isobutanol zu und erwärmte 2 h auf 80°C.

Das Kondensationsprodukt wurde durch Umsetzung von 5,80 kg (50 mol) Hexamethylendiamin, 7,25 kg (12,5 mol) Dimerölsäure und 1,40 kg (5,0 mol) Leinölfettsäure bei 195°C unter Abdestillieren des Reaktionswassers hergestellt. Nach Zusatz von 5,96 kg Toluol hatte diese Lösung einen Feststoffgehalt von 70 Gew.-% und eine Aminzahl von 197 mg/g.

### 1.6 Herstellung eines Vernetzers (nach DE-A 35 42 168, Komponente B1, Seite 5)

504 g (1,0 mol) trimerisiertes Hexamethylendiisocyanat wurden in 382 g Toluol bei 70°C mit 388 g (3,0 mol) Dibutylamin versetzt und gerührt, bis kein Isocyanat mehr nachweisbar war.

### 1.7 Herstellung einer Bindemittel-Vernetzer-Dispersion

872 g Bindemittel nach 1.5 und 364 g Vernetzer nach 1.6 wurden mit 28,7 g Essigsäure neutralisiert und mit 1,2 kg Wasser verdünnt.

### 2. Elektrotauchlackierung und Tests

1 964 g der Dispersion nach 1.7 und 568 g Pigmentpaste wurden vermischt und mit Wasser auf 5 kg aufgefüllt (Feststoffgehalt 20 %).

An als Kathode geschalteten phosphatierten Stahlblechen wurden bei Raumtemperatur in üblicher Weise Lacke abgeschieden. Diese wurden durch Erhitzen für 20 Minuten auf 165°C eingebrannt.

Gemessen wurde die ohne Abrißerscheinungen des überzugs mögliche Abscheidespannung U, die ein empirisches Maß für den Umgriff ist, da der Umgriff bei steigender Abscheidespannung besser wird. Weiterhin wurde die Schichtdicke SD des Überzugs bestimmt. Der Korrosionstest nach DIN 50 021 ist unterteilt in:
- R:: Rostausbreitung (Unterwanderung) am Ritz in mm; der überzug auf dem Probeblech wird eingeritzt und das Blech wird einer korrosiven Atmosphäre ausgesetzt
- F:: Fläche; 0 = kein Rost, 5 = stark verrostet; nach Behandlung in korrosiver Atmosphäre
- K:: Kante; Bewertung wie F; Durchführung wie F

| | Erfindungsgemäß | | | Vergleich | Erfindungsgemäß | | | Vergleich |
|---|---|---|---|---|---|---|---|---|
| | P1 | P2 | P3 | PV1 | P4 | P5 | P6 | PV2 |
| U [V] | 330 | 330 | 340 | 240 | 320 | 260 | 310 | 190 |
| SD [µm] | 24 | 25 | 24 | 18 | 22 | 23 | 24 | 16 |
| | | | | | | | | |
| Korrosion | | | | | | | | |
| R | 1,6 | 1,5 | 1,3 | 2,3 | 2,2 | 2,3 | 1,9 | 4,3 |
| F | 0 | 0 | 0 | 1 | 1 | 1 | 0 | 2 |
| K | 2 | 1 | 2 | 4 | 5 | 4 | 3 | 5 |

Die erfindungsgemäßen Pigmentpasten erlauben eine höhere Abscheidespannung als die Vergleichspasten und haben daher einen besseren Umgriff als diese. Weiterhin sind die abgeschiedenen überzüge dicker als in den Vergleichsbeispielen. Der Korrosionsschutz ist besser als im Vergleich, wobei die bleihaltigen Pigmentpasten - analog zu den Vergleichsversuchen bessere Ergebnisse ergeben als bleifreie.

## Patentansprüche

1. Epoxidharze, erhältlich durch Umsetzung eines
A) mehrfunktionellen Epoxids, das pro Molekül durchschnittlich 1,5 bis 2,5 Epoxidgruppen trägt und dessen Epoxidäquivalentgewicht 100 bis 2 000 beträgt, mit - bezogen auf 1 mol Epoxidgruppen -
B) 0,1 bis 0,5 mol eines Alkylphenols, dessen Alkylgruppen 6 bis 20 Kohlenstoffatome tragen, und
C) 1 bis 100 mmol eines Polyoxyalkylendiols aus 1,2-Propylenoxid oder eines Copolymeren aus 1,2-Propylenoxid und anderen Alkylenoxiden mit einem mittleren Molekulargewicht (M_{w}) von 200 bis 5 000 und durchschnittlich 1 bis 4 an Methylgruppen gebundenen Sulfonsäuregruppen pro Molekül sowie
D) 0,2 bis 0,3 mol eines Diols, das
d₁) ein phenolisches Diol und/oder
d₂) ein Polyoxyalkylendiol mit einem mittleren Molekulargewicht (M_{w}) von 200 bis 5 000 ist,
mit der Maßgabe, daß das Umsetzungsprodukt ein Epoxidäquivalentgewicht von 1 000 bis 5 000 aufweist.

2. Verfahren zur Herstellung von Epoxidharzen gemäß Anspruch 1, dadurch gekennzeichnet, daß man ein
A) mehrfunktionelles Epoxid, das pro Molekül durchschnittlich 1,5 bis 2,5 Epoxidgruppen trägt und dessen Epoxidäquivalentgewicht 100 bis 2 000 beträgt, mit - bezogen auf 1 mol Epoxidgruppen -
B) 0,1 bis 0,5 mol eines Alkylphenols, dessen Alkylgruppen 6 bis 20 Kohlenstoffatome tragen, und
C) 0,1 bis 100 mmol eines Polyoxyalkylendiols aus 1,2-Propylenoxid oder eines Copolymeren aus 1,2-Propylenoxid und anderen Alkylenoxiden mit einem mittleren Molekulargewicht von 200 bis 5 000 und durchschnittlich 1 bis 4 an Methylgruppen gebundenen Sulfonsäuregruppen pro Molekül sowie
D) 0,2 bis 0,3 mol eines Diols, das
d₁) ein phenolisches Diol und/oder
d₂) ein Polyoxyalkylendiol mit einem mittleren Molekulargewicht (M_{w}) von 200 bis 5 000 ist,
mit der Maßgabe umsetzt, daß das Umsetzungsprodukt ein Epoxidäquivalentgewicht von 1 000 bis 5 000 aufweist.

3. Als Pigmentharze für die kathodische Elektrotauchlackierung geeignete Harze, erhältlich durch Umsetzung eines Epoxidharzes gemäß Anspruch 1 mit einem organischen Sulfid in Gegenwart einer Säure in an sich bekannter Weise mit der Maßgabe, daß das Reaktionsprodukt 0,01 bis 0,25 Milliäquivalente ternärer Sulfoniumgruppen pro Gramm Harz aufweist.

4. Verfahren zur Herstellung von Harzen gemäß Anspruch 3, dadurch gekennzeichnet, daß man ein Epoxidharz gemäß Anspruch 1 in an sich bekannter Weise mit einem organischen Sulfid in Gegenwart einer Säure mit der Maßgabe umsetzt, daß das Reaktionsprodukt 0,01 bis 0,25 Milliäquivalente ternärer Sulfoniumgruppen pro Gramm Harz aufweist.

5. Verwendung der Harze gemäß Anspruch 3 als Harzkomponente für Pigmentpasten.

6. Pigmentpasten, enthaltend ein Harz gemäß Anspruch 3 und ein oder mehrere Pigmente im Gewichtsverhältnis von 1:1 bis 10:1.

7. Verfahren zur kathodischen Elektrotauchlackierung in an sich bekannter Weise, dadurch gekennzeichnet, daß man hierzu eine Pigmentpaste gemäß Anspruch 6 verwendet.

8. Verwendung der Pigmentpasten gemäß Anspruch 6 für die kathodische Elektrotauchlackierung.

9. Mittels kathodischer Elektrotauchlackierung beschichtete Gegenstände, erhältlich nach dem Verfahren gemäß Anspruch 7.

## Claims

1. Epoxy resins, obtainable by reacting
A) a polyfunctional epoxide, which carries on average 1.5 to 2.5 epoxy groups per molecule and has an epoxide equivalent weight of from 100 to 2000, with - based on 1 mol of epoxy groups -
B) from 0.1 to 0.5 mol of an alkylphenol, the alkyl groups of which carry from 6 to 20 carbon atoms, and
C) from 1 to 100 mmol of a polyoxyalkylenediol obtained from 1,2-propylene oxide, or of a copolymer obtained from 1,2-propylene oxide and other alkylene oxides, which has an average molecular weight (M_{w}) of from 200 to 5000 and, on average, from 1 to 4 sulphonic acid groups bonded to methyl groups per molecule, and also
D) from 0.2 to 0.3 mol of a diol, which is
d₁) a phenolic diol and/or
d₂) a polyoxyalkylenediol which has an average molecular weight (M_{w}) of from 200 to 5000,
with the proviso that the reaction product has an epoxide equivalent weight of from 1000 to 5000.

2. Process for preparing epoxy resins according to Claim 1, characterized in that
A) a polyfunctional epoxide, which carries on average from 1.5 to 2.5 epoxy groups per molecule and has an epoxide equivalent weight of from 100 to 2000, is reacted with - based on 1 mol of epoxy groups -
B) from 0.1 to 0.5 mol of an alkylphenol, the alkyl groups of which carry from 6 to 20 carbon atoms, and
C) from 0.1 to 100 mmol of a polyoxyalkylenediol obtained from 1,2-propylene oxide, or of a copolymer obtained from 1,2-propylene oxide and other alkylene oxides, which has an average molecular weight of from 200 to 5000 and, on average, from 1 to 4 sulphonic acid groups bonded to methyl groups per molecule, and also
D) from 0.2 to 0.3 mol of a diol, which is
d₁) a phenolic diol and/or
d₂) a polyoxyalkylenediol which has an average molecular weight (M_{w}) of from 200 to 5000,
with the proviso that the reaction product has an epoxide equivalent weight of from 1000 to 5000.

3. Resins which are suitable as pigment resins for cathodic electrodeposition coating and are obtainable by reacting an epoxy resin according to Claim 1 with an organic sulphide in the presence of an acid in a manner known per se, with the proviso that the reaction product contains from 0.01 to 0.25 milliequivalents of ternary sulphonium groups per gram of resin.

4. Process for preparing resins according to Claim 3, characterized in that an epoxy resin according to Claim 1 is reacted in a manner known per se with an organic sulphide in the presence of an acid, with the proviso that the reaction product contains from 0.01 to 0.25 milliequivalents of ternary sulphonium groups per gram of resin.

5. Use of the resins according to Claim 3 as resin component for pigment pastes.

6. Pigment pastes containing a resin according to Claim 3 and one or more pigments in a weight ratio of from 1:1 to 10:1.

7. Process for cathodic electrodeposition coating in a manner known per se, characterized in that a pigment paste according to Claim 6 is used for this purpose.

8. Use of the pigment pastes according to Claim 6 for cathodic electrodeposition coating.

9. Articles coated by means of cathodic electrodeposition coating and obtainable by the process according to Claim 7.

## Revendications

1. Résines époxydes que l'on peut obtenir par réaction
A) d'un époxyde polyfonctionnel, qui porte par molécule en moyenne de 1,5 à 2,5 groupements époxydes et dont le poids équivalent en époxyde est de 100 à 2 000, avec - par rapport à 1 mole de groupements époxydes -
B) de 0,1 à 0,5 mole d'un alkylphénol, dont les groupements alkyles portent de 6 à 20 atomes de carbone et
C) de 1 à 100 millimoles d'un polyoxyalkylènediol obtenu à partir d'oxyde de 1,2-propylène ou d'un copolymère d'oxyde de 1,2-propylène et d'autres oxydes d'alkylène ayant un poids moléculaire moyen (M_{w}) de 200 à 5 000 et en moyenne de 1 à 4 groupements d'acide sulfonique liés aux groupements méthyle par molécule ainsi qu'avec
D) 0,2 à 0,3 mole d'un diol, qui est
d1) un diol phénolique et/ou
d2) un diol de polyoxyalkylène ayant un poids moléculaire moyen (M_{w}) de 200 à 5 000,
sous réserve que le produit de réaction présente un poids équivalent en époxyde de 1 000 à 5 000.

2. Procédé pour la préparation de résines époxydes conformément à la revendication 1, caractérisé en ce que l'on fait réagir
A) un époxyde polyfonctionnel, qui porte par molécule en moyenne de 1,5 à 2,5 groupements époxydes et dont le poids équivalent en époxyde est de 100 à 2 000, avec - par rapport à 1 mole de groupements époxydes -
B) de 0,1 à 0,5 mole d'un alkylphénol, dont les groupements alkyles portent de 6 à 20 atomes de carbone et
C) de 0,1 à 100 millimoles d'un polyoxyalkylènediol obtenu à partir d'oxyde de 1,2-propylène ou d'un copolymère d'oxyde de 1,2-propylène et d'autres oxydes d'alkylène ayant un poids moléculaire d'acide sulfonique liés aux groupements méthyle par molécule ainsi qu'avec
D) 0,2 à 0,3 mole d'un diol, qui est
d1) un diol phénolique et/ou
d2) un diol de polyoxyalkylène ayant un poids moléculaire moyen (M_{w}) de 200 à 5 000,
sous réserve que le produit de réaction présente un poids équivalent en époxyde de 1 000 à 5 000.

3. Résines appropriées en tant que résines pigmentaires pour l'électrodéposition cathodique, que l'on peut obtenir par réaction d'une résine époxyde selon la revendication 1 avec un sulfure organique en présence d'un acide d'une manière connue en soi, sous réserve que le produit de réaction présente de 0,01 à 0,25 milliéquivalent de groupements sulfonium ternaire.

4. Procédé pour la préparation de résines selon la revendication 3, caractérisé en ce que l'on fait réagir une résine époxyde selon la revendication 1 d'une manière connue en soi avec un sulfure organique en présence d'un acide, sous réserve que le produit de réaction présente de 0,01 à 0,25 milliéquivalent de groupements sulfonium ternaires par gramme de résine.

5. Utilisation des résines selon la revendication 3 en tant que composants de résine pour des pâtes pigmentaires.

6. Pâtes pigmentaires, contenant une résine selon la revendication 3, et un ou plusieurs pigments dans le rapport de poids de 1:1 à 10:1.

7. Procédé pour l'électrodéposition cathodique d'un manière connue en soi, caractérisé en ce que l'on utilise pour ce faire une pâte pigmentaire selon la revendication 6.

8. Utilisation des pâtes pigmentaires selon la revendication 6 pour l'électrodéposition cathodique.

9. Articles revêtus par électrodéposition cathodique, que l'on peut obtenir conformément au procédé selon la revendication 7.
